# EUROPEAN PATENT APPLICATION

(11) **EP 3 425 329 A1**
(43) Date of publication of application: **09.01.2019**
(21) Application number: 18177288.0
(22) Date of filing: 12.06.2018
(51) Int. Cl.: G01B 21/04, B23Q 17/22, G05B 19/401

(54) **CNC MACHINE GEOMETRY ERROR AND ACCURACY MONITORING AND EVALUATION**

(30) Priority: 07.07.2017 US 201715643916
(71) Applicant: Fives Machining Systems, Inc., Fond du Lac WI 54935 (US)
(72) Inventor: Phommasith, Thomas, Hebron, KY 41048 (US)
(74) Representative: Rau, Schneck & Hübner Patentanwälte Rechtsanwälte PartGmbB

(57) **Abstract**

A method and apparatus is disclosed for measuring the volumetric accuracy during machine operation of a machine having machine members. The method follows the steps of measuring the machine prior to machine operation using traditional methods, mounting sensors on the machine members and calibrating the sensors to a zero position. Each sensor location is correlated to a physical location of a measured geometry point on the machine member. The angular change of the machine members is measured continuously at each sensor location during machine operation. The machine measurements taken by traditional methods prior to machine operation are compared with sensor measurements taken at all times including during machine operation to determine any changes in machine geometry and to calculate tool path error.

## Description

CNC geometry error, single axis accuracy, and volumetric accuracy monitoring and evaluation of a machine tool is carried out using fixed precision sensors which measure geometric relationships of the machine tool members during machine operation, mapped to an existing machine characterization result, to produce calculated tool path error.

It is known in the machine tool industry to perform volumetric measurements of a computer numerically controlled (CNC) machine tool at the tool tip or tool center point. Such measurements may utilize linear displacement measurement with a laser interferometer or other measurement techniques. Such measurements require equipment set up and removal for each measurement event. This type of measurement is lacking in the following respects:
1. It does not acknowledge or take into account changes after the measurement event, because measurement does not occur while the machine is being used for manufacturing operations.
2. Body diagonal laser measurement per standards such as ISO 230-6 at the tool tip does not attribute measured errors to geometry errors in the machine axes.
3. Measurements taken at the spindle or tool tip does not monitor geometry error and geometry change at the source.
4. The lack of continuously automated data measurement does not allow for machine behavior, geometry error, and volumetric accuracy to be trended and analyzed with high frequency over extended period of time like months, seasons, and years.

The present device does not monitor the status or performance of a cutting tool, but rather utilizes sensors affixed to the machine structure which measure changes in roll, pitch and yaw around all axes. The sensors measure and monitor the geometry of the machine tool, ensuring it is within allowable tolerances. The system directly monitors the angular geometric relationships of each member of the machine against mapped characterization results to output updated geometry error results and volumetric accuracy error.

The present device does not use secondary measuring technologies such as cameras or lasers to opto-electronically capture machine member positions, or to monitor relational differences between two points. Instead, precision electronic levels are affixed directly to attachment points on the machine members, and are calibrated to a zero or level position. At all times including during machine operation, data collected from the level sensors indicates movement of the sensors from the previously calibrated zero position. Using the differential information of the angles from the sensors and their physical locations, the system controller calculates the updated geometric error change per machine axis and also the volumetric accuracy of the machine.

The present device differs from prior efforts because it does not focus on tool tip or tool center point measurement to provide geometry error and volumetric accuracy results. It focuses on the continuous measurement of the angular degree of freedom error changes occurring at the CNC machine structure to calculate the geometry error of the machine from baseline measurements, the accuracy of each axis, and the volumetric accuracy that occurs at the tool tip as a result. It differs from traditional volumetric accuracy solutions in the industry by the following:
1. The measurement instruments deploy many sensors affixed at predetermined attachment points on the CNC machine structure.
2. Direct measurements for calculating volumetric accuracy occurs on the machine structure and not at the tool tip.
3. It utilizes both static and dynamic angular measurements simultaneously.
4. Once installed, geometry error and volumetric accuracy evaluation is performed in real-time and continuously while the machine is being used in manufacturing operations.
5. The volumetric accuracy occurring at the tool tip is "calculated" and not "measured" using empirical measurements occurring continuously at various locations on the machine structure in real-time.
6. Due to the continuous measurement by the system, data can be stored for machine behavior analysis and geometry error data trending and analysis.

The system is based on measuring the deviation of sensors from their initial level position which measure each degree of freedom within the machine and using those measurements to calculate and to update the baseline roll, pitch, yaw, straightness, accuracy, squareness, and volumetric accuracy results of the machine.

The angle sensors are physically attached to the machine structure, and will measure the machine distortion as roll, pitch, or yaw directly at the sensor location. The machine axis roll, pitch, yaw, straightness and positioning accuracy is then calculated out to the tool tip in order to report out errors occurring at the tool tip.
- Figure 1: is a perspective view of an overhead gantry machine tool.
- Figure 2: is a perspective view of a vertical machining center.
- Figure 3: is a perspective view of a horizontal machining center.
- Figure 4: shows the elements of the system used on a machine tool.
- Figure 5: shows the steps of using the device as shown in Figures 1-4.

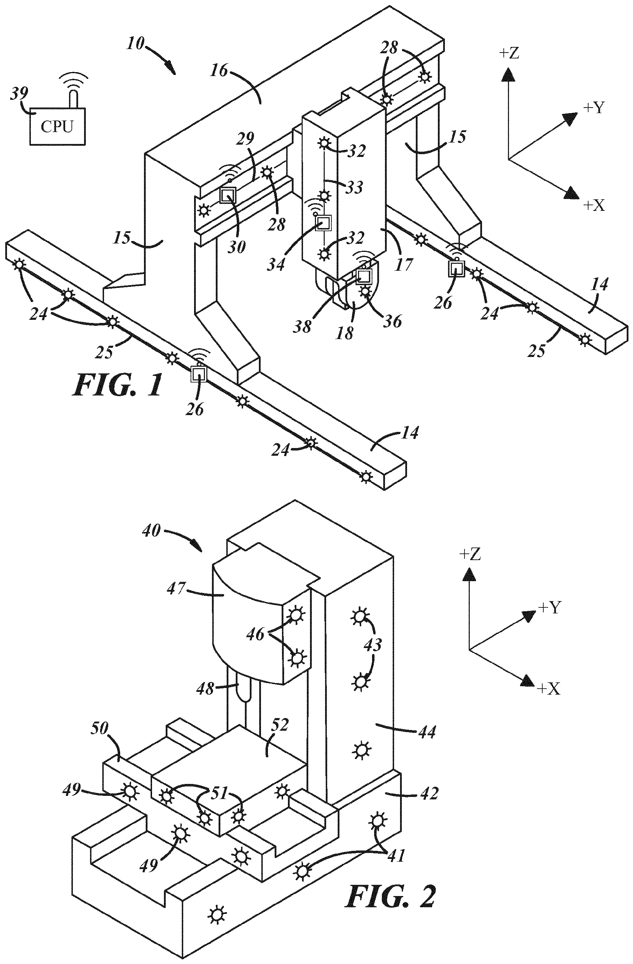

Figure 1 is a perspective view of an overhead gantry machine tool generally designated by the reference numeral 10. The overhead gantry machine 10 comprises a pair of rails 14 which extend in the X-axis, and a pair of vertical supports 15 which extend in the Z-axis. The vertical supports 15 support a horizontal beam 16 which extends in the Y-axis, and a vertical Z-axis column 17 which supports a spindle 18. The pair of vertical supports 15 move in the X-axis along the rails 14, and the Z-axis column moves horizontally in the Y-axis across the horizontal beam 16, and vertically in the Z-axis.

A plurality of precision level sensors 24 are mounted at attachment points on each of the rails 14, and a plurality of precision level sensors 28 are mounted on the horizontal beam 16. Precision level sensors 32 are also mounted at attachment points on the Z-axis column 17, and one or more precision level sensors 36 may be mounted on the spindle 18. The precision level sensors 24 on the rails 14 may be electrically coupled by a line 25 to a data acquisition device 26, and the precision level sensors 28 on the beam 16 may be electrically coupled by a line 29 to a data acquisition device 30. The precision level sensors 32 on the column 17 may be electrically coupled by a line 33 to a data acquisition device 34, and the precision level sensors 36 on the spindle 18 may be electrically coupled by a line (not shown) to a data acquisition device 38. The data acquisition devices 26, 30, 34, and 38 may have Bluetooth transmission capability to send the signals that they receive from the precision level sensors 24, 28, 32, and 36 to a central processing unit (CPU)39 as described more fully below.

The term "precision level sensor" as used herein refers to an electronic level that measures the angle of a surface or the angle of an object along its axis of motion. The output measurement is compared to earth level and/or a preset reference angle. Other types of position or motion sensors may be used. The number and location of the precision level sensors as shown and described herein are for purposes of example only, and other numbers and locations of the sensors may be employed.

Figure 2 shows another form of a machine tool, a vertical machining center 40, fitted with precision level sensors at attachment points on the machine. The vertical machining center 40 comprises a machine base 42, a column 44, a saddle 47 that carries the spindle 48, a Y-axis slide 50, and an X-axis table 52. Sensors 41 are located on the machine base 42, sensors 43 are mounted on the column 44, and sensors 46 are mounted on the saddle 47 that carries the spindle 48. Sensors 49 may also be mounted on the Y-axis slide 50, and sensors 51 may be mounted on the X-axis table 52. In a manner similar to the arrangement described above in connection with Figure 1, the sensors 41, 43, 46, 49, and 51 may be electrically coupled to data acquisition devices (not shown), and the data acquisition devices may be coupled by Bluetooth transmission to a CPU.

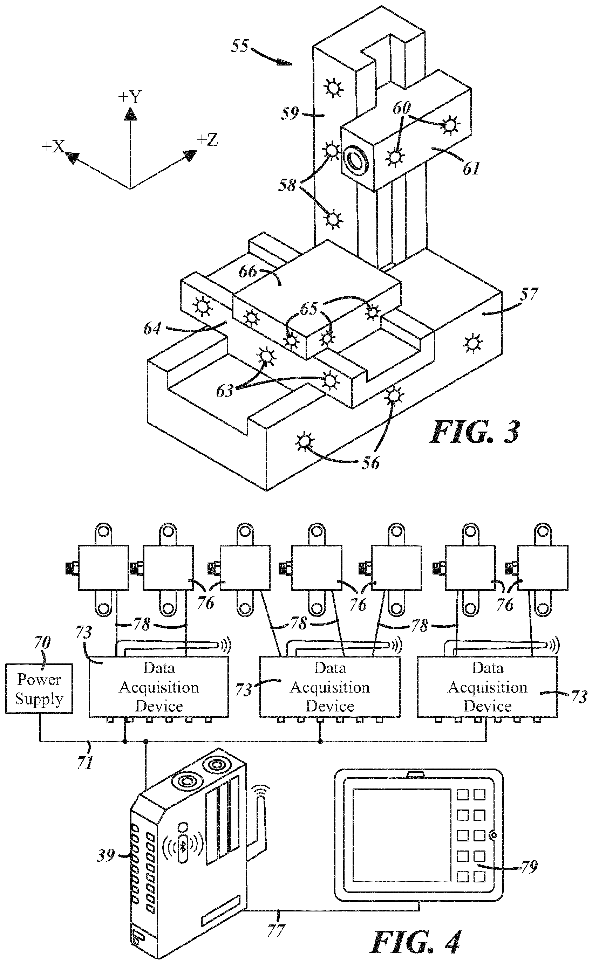

Figure 3 shows another form of a machine tool, a horizontal machining center 55 fitted with precision level sensors at attachment points on the machine. The horizontal machining center 55 comprises a machine base 57, a Y-axis column 59, a spindle housing 61, a Z-axis slide 64, and an X-axis table 66. Sensors 56 are located on the machine base 57, sensors 58 are located on the Y-axis column 59, and one or more sensors 60 may be located on the spindle housing 61. Sensors 63 may also be mounted on the Z-axis slide 64, and sensors 65 may be mounted on the X-axis table 66. In a manner similar to the arrangement described above in connection with Figure 1, the sensors 56, 58, 60, 63, and 65 may be electrically coupled to data acquisition devices (not shown), and the data acquisition devices may be coupled by Bluetooth transmission to a CPU 39.

Figure 4 shows the principal elements of the system coupled together for machine condition sensing and transmission to the CPU 39. A power supply 70 may be coupled by a supply line 71 to supply power to a plurality of data acquisition devices 73. Each of the data acquisition devices 73 may be coupled to one or more precision level sensors 76 and can also supply power to the sensors 76 as needed. Each of the precision level sensors 76 receive power from one of the data acquisition devices 73 via a line 78, and send data to the data acquisition devices via the line 78. Each of the data acquisition devices 73 may have Bluetooth transmission capability to transmit data received from the precision level sensors 76 to the CPU39. Alternatively, the data acquisition devices 73 may also be hard wired to the CPU 39. An operator interface or control panel 79 may be coupled to the CPU 39 by a line 77 to configure and display the system results.

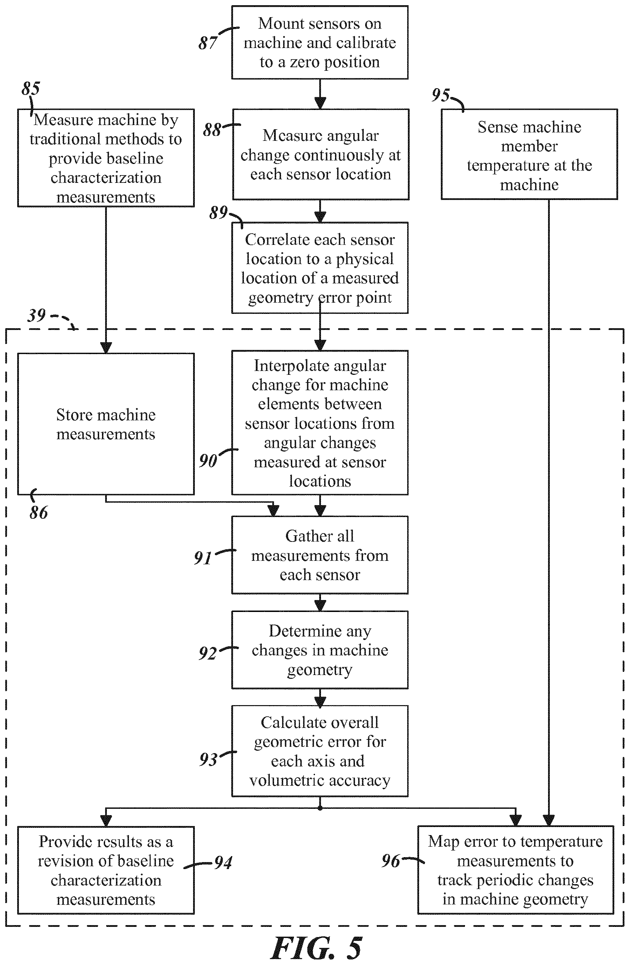

Figure 5 shows the steps of using the device as shown in Figures 1-4. In step 85, the machine is first characterized prior to machine operation following ASME B5.54 and ISO 230-1, ISO-230-2 and ISO 230-6 methodology for linear displacement, roll, pitch, yaw, and straightness error for all linear axes, and squareness errors. Traditional methods for characterizing a machine include the use of lasers, linear displacement indicators, electronic levels, ball bars and the like. Other methods and devices may be used to characterize the machine. In step 86, the machine measurements are then stored in the CPU 39. In step 87, sensors are mounted on the machine and calibrated to a zero position. In actual operation, absolute angle precision electronic level sensors were used, but other sensors may be employed. In step 88, and during machine operation, the sensors measure angular change continuously at each sensor location, and send that information to the CPU 39. In step 89, each sensor location is correlated to a physical location of a measured geometry error point. The term "measured geometry error point" as used herein means a machine baseline characterization measurement point. In step 90, the CPU interpolates the angular change for machine elements between sensor locations on the machine using angular changes measured at sensor locations. The interpolation is necessary because it may not be possible to put a sensor at each baseline characterization measurement point. The system must update each baseline characterization measurement point to ensure accuracy in updating the machine axis geometry profile. The CPU's main operation is to compare the machine measurements made by traditional methods in step 85 to the measurements made by the sensors continuously. In step 91, the CPU gathers all the measurements taken from each of the sensors. In step 92, the CPU determines any changes in the machine geometry by taking changes in the sensor readings, calculating the errors at each sensor location, interpolating errors at each baseline characterization measurement point, and comparing each of the results to the baseline characterization measurement results at each point. A more detailed explanation is given below. In step 93, as a result of the determination made in step 92, the CPU calculates the overall geometric error range of each axis and the volumetric accuracy of the machine. In step 94, the CPU outputs the updated results as a revision of the baseline characterization results. The CPU also outputs the change as a percent change of the baseline results.

In further explanation of the process stated above, in step 92 the process for determining changes in machine geometry may vary depending on the machine type and structure being analyzed. An example of pitch error, horizontal straightness error, and volumetric accuracy error determination from changes in the sensor readings are discussed below.

To determine pitch error on the X-axis on a machine as shown in Figure 2, pitch angle measurements from each of the three sensors 49 are gathered by the CPU 39. The actual readings are assigned a physical address along the baseline characterization measurement line by the CPU. If the actual readings all read zero, the baseline characterization measurement line for pitch error remains unchanged. If any of the sensors 49 read an amount other than zero, the actual error reading from each sensor is added to the baseline characterization measurement line at the location it was assigned. Errors are then interpolated for each baseline characterization measurement point that lies between each sensor location, and are added to the baseline characterization measurement points.

To determine horizontal straightness error in the Y-axis of a machine having a configuration similar to is the machine shown in Figure 1, roll measurements about the Y-axis from each of the sensors 28 are gathered by the CPU 39. If all of the actual readings read zero, the baseline characterization measurement line for Y-axis roll error remains unchanged, and likewise the Y-axis horizontal straightness baseline characterization measurement line remains unchanged. If any of the sensors 28 read an amount other than zero, the actual roll error reading from each sensor is added to the baseline characterization measurement line at the location it was assigned. Then errors are interpolated for each baseline characterization measurement point that lies between each sensor location, and is added to the baseline characterization measurement point. Each of the new roll error angular values are used to calculate horizontal straightness by multiplying the angle by its conversion to linear units for the distance from the pivot of the axis to the tool tip.

To determine YZ squareness error of a machine having a configuration similar to the machine shown in Figure 3, angle measurements from the sensors 60 that sense angle about the X-axis, and angle measurements from the sensors 58 that sense angle about the Z-axis are gathered by the CPU 39. The average of the angles from the sensors 60 and the average of the angles from the sensors 58 are summed and then added to the baseline characterization measurement result to obtain the updated YZ squareness error result.

In step 95, ambient temperature may be sensed at the machine, and the temperature readings may be sent to the CPU 39. In step 96, the CPU may map periodic changes in machine geometry as a function of temperature to develop a trend analysis over time. The periodic changes may be on an hourly, daily, or seasonal basis.

The process of using the device utilizes real-time machine geometry and volumetric accuracy monitoring and evaluation of a machine using fixed precision sensors which measure the geometric relationship changes of CNC machine members during machine operation. The process evaluates geometric behavior at each machine stack up level, versus measuring only linear deviation at the machine tool tip. The process uses the reference locations of each sensor, the measured magnitude of each sensor measurement, the direction of the measurement, and the positional relationships between each sensor, to compare and update baseline characterization results that were empirically measured, including axis angular, axis straightness, and planar degree of freedom errors. Any changes to the magnitude and direction of each sensor are sensed immediately and in real time using continuous data acquisition. Further processing of the information may allow for root cause axis and planar error determination, analysis, and correction. The process is finalized with a continuously updated recalculation of the volumetric accuracy capability of the machine.

The present system detects angular change of the machine members and measures the positional difference of a plurality of single points on the machine from an initial zero-calibrated position through the use of a plurality of precision level sensors. Thermal growth, wear, or stress-induced distortion of a machine member during operation is directly measured by a sensor as the difference between the current position of the machine member and the zero-calibrated position.

Each sensor continuously measures a singular point on the machine to which it is attached in order to detect rotational movement in any direction. The singular point may be on the machine tool frame and/ or on a moving element of one or more of the machine axes. Calculations for machine geometry error and volumetric accuracy are made using baseline characterization results and a combination of measured angles from the sensors and the locations of the detected angles.

Having thus described the device, various modifications and alterations will occur to those skilled in the art, which modifications and alterations are believed to be within the scope of the device as defined by the appended claims.

## Claims

1. A method for measuring the volumetric accuracy of a machine having machine members at all times to include during machine operation, the method comprising the steps of:
measuring the machine geometry errors prior to machine operation using traditional methods to develop a baseline characterization of the machine;
mounting sensors on the machine members and calibrating the sensors to a zero position;
correlating each sensor location to a physical location of a measured geometry point on the machine members;
measuring an angular change of machine members continuously at each sensor location during machine operation;
comparing sensor readings and interpolated results to the baseline characterization,
determining any changes in machine geometry; and,
calculating tool path error.

2. The method of claim 1 further comprising the step of:
using changes in measured angles by a plurality of fixed sensors mounted on the machine to calculate machine geometry error and volumetric accuracy, while the machine is static and is not moving.

3. The method of claim 1 or 2 further comprising the step of:
using changes in measured angles by a plurality of fixed sensors mounted on the machine to calculate machine geometry error and volumetric accuracy while the machine is moving.

4. The method of at least one of claims 1 to 3 further comprising the step of:
sensing and measuring material temperature of the machine members; and,
mapping the tool path error to the measured material temperature of each sensor location to track periodic changes in machine geometry as a function of temperature.

5. The method of claim 4 further comprising the step of:
tracking changes in machine geometry as a function of temperature on a timed basis.

6. The method of claim 4 or 5 further comprising the step of:
tracking changes in machine geometry as a function of temperature on an hourly basis.

7. The method of at least one of claims 4 to 6 further comprising the step of:
tracking changes in machine geometry as a function of temperature on a daily basis.

8. The method of at least one of claims 4 to 7 further comprising the step of:
tracking changes in machine geometry as a function of temperature on a seasonal basis.

9. The method of at least one of claims 1 to 8 further comprising the steps of:
using angle sensors mounted on the machine members to measure the angular change of the machine members during machine operation.

10. The method of at least one of claims 1 to 9 further comprising the steps of:
using data from a plurality of sensors to update the measurement results from baseline characterization.

11. A system to produce calculated tool path error of a machine tool having machine members by monitoring the geometric error of the machine members and volumetric accuracy during machine operation, the system comprising:
a central processing unit (CPU) for receiving readings taken from baseline characterization of machine geometry errors such as roll, pitch, yaw, straightness, squareness, and volumetric accuracy;
a plurality of fixed precision sensors mounted on the machine members;
data acquisition devices for transmitting readings taken by the fixed precision sensors during machine tool operation to the CPU, whereby the CPU compares readings from the sensors to the baseline characterization readings to produce a continuously calculated updated tool path error.

12. The system of claim 11 wherein the fixed precision sensors calculate linear movement of the machine members in the X, Y, and Z axes by using angular errors obtained from the plurality of fixed precision sensors.

13. The system of claim 11 or 12 wherein the fixed precision sensors measure rotational movement of the machine tool members around machine axes.

14. The system of at least one of claims 11 to 13 wherein the fixed precision sensors are electronically programmable angle sensors.

15. The system of at least one of claims 11 to 14 further comprising:
a rotary head on the machine tool and at least one fixed precision sensor mounted on the rotary head.

16. The system of claim 15 further comprising:
a column for supporting the rotary head on the machine tool and at least one fixed precision sensor mounted on the column.

17. The system of claim 16 further comprising:
a support beam on the machine tool for supporting at least one of the rotary head and the column; and
the at least one fixed precision sensor is mounted on the support beam.

18. The system of claim 17 further comprising:
a pair of vertical supports supporting the support beam; and,
at least one fixed precision sensor mounted on at least one of the vertical supports.
